(19) Europäisches Patentamt

European Patent Office

Office européen des brevets

(11) **EP 0 742 631 B1**

(12) **FASCICULE DE BREVET EUROPEEN**

(45) Date de publication et mention
de la délivrance du brevet:
**06.02.2002 Bulletin 2002/06**

(51) Int Cl.7: **H02J 3/01**, H02M 1/12

(21) Numéro de dépôt: **96410048.1**

(22) Date de dépôt: **07.05.1996**

(54) **Dispositif de filtrage**

Filteranordnung

Filtering device

(84) Etats contractants désignés:
**DE ES GB IT**

(30) Priorité: **11.05.1995 FR 9505806**

(43) Date de publication de la demande:
**13.11.1996 Bulletin 1996/46**

(73) Titulaires:
- **Schneider Electric Industries SA**
  **92500 Rueil-Malmaison (FR)**
- **ELECTRICITE DE FRANCE**
  **75008 Paris (FR)**

(72) Inventeurs:
- **Bettega, Eric**
  **38050 Grenoble Cedex 09 (FR)**
- **Wang, Miaoxin**
  **38050 Grenoble Cedex 09 (FR)**

(74) Mandataire: **Jouvray, Marie-Andrée et al**
**Schneider Electric SA, Sce. Propriété**
**Industrielle**
**38050 Grenoble Cédex 09 (FR)**

(56) Documents cités:
**EP-A- 0 254 073          EP-A- 0 431 967**
**DE-A- 4 123 005**

- **IEEE TRANSACTIONS ON INDUSTRY APPLICATIONS, vol. 29, no. 1, Janvier 1993, NEW YORK US, pages 144-152, XP002032547 F.ZHENG ET AL: "COMPENSATION CHARACTERISTICS OF THE COMBINED SYSTEM OF SHUNT PASSIVE AND SERIES ACTIVE FILTERS"**
- **EUROPEAN TRANSACTIONS ON ELECTRICAL POWER, vol. 4, no. 5, Septembre 1994, BERLIN, pages 347-358, XP002032548 L.CZARNECKI: "DYNAMIC,POWER-QUALITY-ORIENTED APPROACH TO POWER THEORY AND COMPENSATION OF ASYMMETRICAL SYSTEMS UNDER NON-SINUSOIDAL CONDITIONS"**

## Description

L'invention concerne un dispositif de filtrage comportant :

- une borne d'entrée connectée à une source d'énergie électrique, une borne de sortie connectés à une charge électrique et une borne commune d'entrée-sortie connectée à la source et à la charge,

- des moyens de filtrage passif et des moyens de filtrage actif connectés en série entre la borne d'entrée et la borne commune du dispositif de filtrage, la borne de sortie étant connectée auxdits moyens de filtrage actif, lesdits moyens de filtrage actif comportant deux bornes dont l'une est connectée à la borne d'entrée et l'autre est connectée aux moyens de filtrage passif et des moyens pour générer une tension de filtrage entre lesdites deux bornes,

- des premiers moyens de contrôle des moyens de filtrage actif contrôlant la tension de filtrage entre les deux bornes desdits moyens de filtrage actif,

- des moyens de mesure de courant fournissant aux premiers moyens de contrôle des premiers signaux représentatifs du courant d'entrée du dispositif de filtrage.

Les dispositifs de filtrage sont utilisés pour éliminer ou atténuer des courants harmoniques dans des réseaux de distribution électrique. Ces courants harmoniques sont provoqués par des charges non-linéaires connectées aux réseaux de distribution. Les charges perturbatrices les plus répandues sont des convertisseurs ou des régulateurs comportant des composants électroniques de puissance.

Un accroissement du taux de courants harmoniques dans le réseau de distribution risque de perturber le fonctionnement ou d'endommager les charges électriques sensibles. Pour limiter le taux de courants harmoniques, il est connu d'utiliser des dispositifs de filtrage connectés sur des lignes du réseau.

Les dispositifs de filtrage comportent généralement des filtres passifs et des filtres actifs. Les filtres passifs fonctionnent comme des puits de courant et absorbent les harmoniques de fréquences sensiblement égales aux fréquences de résonance desdits filtres. Les filtres actifs permettent de rétablir un courant sinusoïdal dans le réseau en compensant les courants déformés par des charges non linéaires. La compensation se fait en injectant un courant de correction en parallèle dans le réseau. Le courant du réseau correspond alors à la somme du courant de charge déformé et du courant de correction. Un tel dispositif de filtrage est décrit notamment dans la demande de brevet EP-A-0 431 967.

Les dispositifs de filtrage connectés directement sur le réseau supportent l'ensemble des perturbations. Ceci conduit à un surdimensionnement des filtres, particulièrement lorsque la compensation des harmoniques ne doit porter que sur une charge ou un groupe de charges prédéfinies. Pour adopter la compensation des courants harmoniques à une charge ou à un groupe, les dispositifs de filtrage peuvent comporter des filtres passifs connectés en parallèles sur la charge et des filtres actifs connectés à une ligne d'alimentation de la charge. Un tel dispositif de filtrage est décrit notamment dans le document "IEEE TRANSACTIONS ON INDUSTRY APPLICATIONS, VOL. 29, no.1, Janvier 1993, NEW YORK US".

Dans la disposition connue décrite ci-dessus, les filtres passifs éliminent les courants harmoniques produits par la charge et correspondant aux fréquences de résonance desdits filtres passifs. Les filtres actifs laissent passer les courants ayant une fréquence fondamentale entre le réseau et la charge et limitent le passage des harmoniques de courant. Les filtres passifs ne sont plus alimentés directement par les courants harmoniques du réseau. La puissance absorbée par les filtres passifs dépend essentiellement des caractéristiques de la charge.

Une telle disposition permet d'avoir un bon compromis entre une puissance d'absorption réduite des filtres passifs et une bonne compensation des courants harmoniques. Cependant des harmoniques produits par la charge, et dont les fréquences ne sont pas prévues dans les filtres passifs, ne peuvent pas s'évacuer vers le réseau. Ces harmoniques vont se manifester alors sous la forme de surtensions. Le taux d'harmoniques en tension augmente alors aux bornes de la charge et risque de dépasser un niveau admissible. Les surtensions harmoniques du réseau ne sont pas suffisamment atténuées par le dispositif de filtrage et peuvent s'ajouter à celle générées par la charge.

L'invention a pour but un dispositif de filtrage permettant de réduite le taux de courants et de tension harmoniques appliqués à une charge électrique.

Selon l'invention ce but est atteint par le fait que le dispositif de filtrage des seconds moyens de contrôle des moyens de filtrage actif et des moyens de mesure de tension fournissant aux seconds moyens de contrôle des seconds signaux représentatifs de la tension aux bornes des moyens de filtrage passif ou de l'ensemble des moyens de filtrage actif et passif connectés en série, les moyens de filtrage actif comportant des moyens pour générer une tension de filtrage entre les deux bornes desdits moyens de filtrage actif, contrôlés par les premiers et seconds moyens de contrôle pour faire circuler facilement de la charge vers la source, en fonction de la fréquence, des courants harmoniques générés par la charge.

Dans un mode de réalisation préférentiel, la tension de filtrage des moyens de filtrage actif est déterminée par la valeur des premiers signaux corrigés par un premier coefficient variable en fonction de la fréquence, et par la valeur des seconds signaux corrigés par un second coefficient variable en fonction de la fréquence.

Le premier coefficient a une valeur basse à une fréquence sensiblement égale à la fréquence fondamentale de la source et une première valeur élevée prédéterminée pour des fréquences couvrant des harmoniques de ladite fréquence fondamentale, et le second coefficient a une valeur basse à une fréquence sensiblement égale à la fréquence fondamentale de la source et une seconde valeur élevée prédéterminée pour des fréquences couvrant des harmoniques de ladite fréquence fondamentale.

Selon un mode de réalisation particulier, le premier coefficient a une valeur basse à une fréquence sensiblement égale au septième harmonique de la fréquence de la source. Les moyens de filtrage passif comportent des filtres accordés sur le cinquième harmonique et sur le onzième harmonique de la fréquence de la source.

Dans un développement de l'invention le premier coefficient a une valeur élevée prédéterminée située entre un vingtième et cinq fois une valeur représentative de l'impédance de condensateurs de compensation connectés à la charge, l'impédance des condensateurs étant déterminée pour une fréquence sensiblement égale à la fréquence fondamentale de la source. Le second coefficient a une valeur élevée prédéterminée inférieure ou égale à un.

La borne de sortie du dispositif de filtrage est connectée à un point commun des moyens de filtrage actifs et des moyens de filtrage passifs connectés en série ou à la borne d'entrée dudit dispositif de filtrage.

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :

La figure 1 représente le schéma d'un circuit électrique comportant un dispositif de filtrage connu.

La figure 2 représente le schéma d'un circuit électrique comportant un dispositif de filtrage selon un premier mode de réalisation de l'invention.

La figure 3 montre la variation en fréquence d'un premier coefficient de correction de signaux de courant.

La figure 4 montre la variation en fréquence d'un second coefficient de correction de signaux de tension.

Les figures 5 et 6 représentent des schémas de circuits électriques comportant des dispositifs de filtrage respectivement selon des second et troisième modes de réalisation de l'invention.

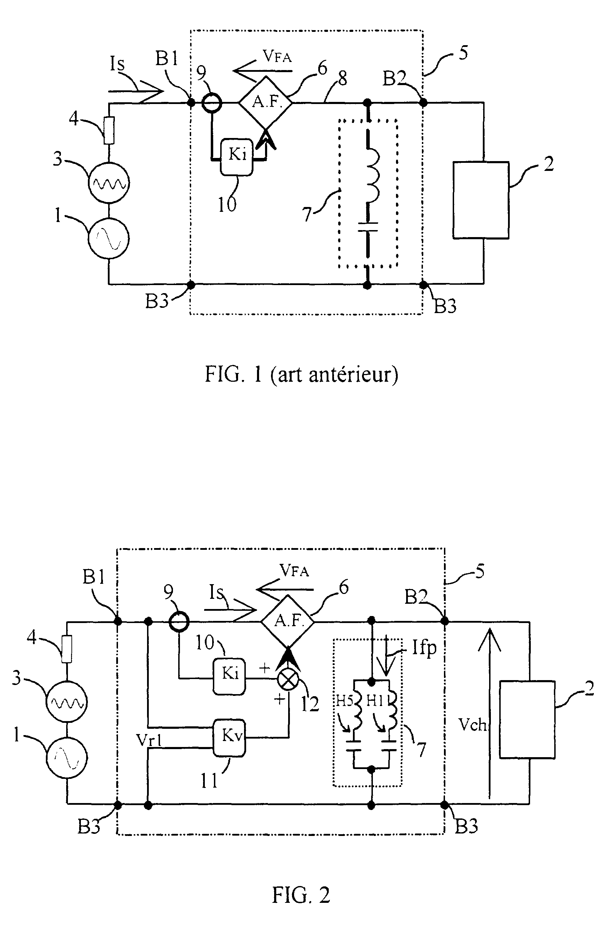

Le circuit électrique de la figure 1 comporte une source d'énergie électrique qui alimente une charge électrique 2. La source d'énergie est représentée par un générateur de tension 1. Des perturbations harmoniques générées par des charges non linéaires présentes en amont du dispositif sont représentées par un second générateur 3 connecté en série avec le générateur de tension 1. Une impédance 4, connectée en série avec le générateur 1 représente l'impédance de ligne du circuit électrique.

Un dispositif de filtrage 5, connecté entre la source et la charge, atténue les perturbations harmoniques appliquées à la charge. Une borne d'entrée B1 du dispositif 5 est connectée à la source 1, une borne B2 de sortie est connectée à la charge 2 et une borne d'entrée sortie B3 est connectée à la source et à la charge. Le dispositif de filtrage comporte un filtre actif 6 et un filtre passif 7 connectés en série entre la borne B1 et la borne B3. le filtre actif 6 est connecté en série entre la borne d'entrée B1 et la borne de sortie B2, reliant la source 1 à la charge 2 à travers une ligne 8. Un capteur de courant 9 mesure un courant Is circulant dans la ligne 8 en entrée du dispositif 5 et fournit un signal représentatif dudit courant Is à un circuit de contrôle 10.

Le circuit 10 contrôle une tension VFA entre une première et une seconde bornes du filtre actif 6 intercalées sur la ligne 8. La première borne du filtre actif est connectée à la borne B1 d'entrée. Le filtre actif 6 fonctionne en impédance contrôlée. La tension VFA à ses bornes est proportionnelle à un coefficient Ki du circuit de contrôle. La valeur de Ki est très faible ou nulle pour un signal représentatif du courant Is de fréquence FO proche de la fréquence fondamentale de la source. Pour des composantes de Is éloignées de la fréquence fondamentale, la valeur de Ki prend une valeur maximale Kimax. La loi de commande du filtre est :

$$VFA = Ki \cdot Is$$

VFA est la tension aux bornes du filtre actif, Is la valeur du courant mesuré et Ki le coefficient variable en fonction de la fréquence. Ki est une grandeur de même nature qu'une impédance et peut s'exprimer en ohms.

EP 0 742 631 B1

Le filtre passif 7, connecté entre la seconde borne du filtre actif et la borne B3, est disposé en parallèle sur la charge 2. Il absorbe les perturbations produites par la charge si elles se trouvent dans des fréquences de résonances prédéterminées. En dehors des fréquences d'absorption du filtre passif 7, les courants harmoniques générés par la charge et bloqués par le filtre actif 6 provoquent des surtensions harmoniques.

La figure 2 montre un circuit électrique comportant un dispositif de filtrage selon un premier mode de réalisation de l'invention. Le dispositif de filtrage comporte un premier circuit de contrôle 10 recevant, comme sur la figure 1 un signal représentatif du courant Is et un second circuit de contrôle 11. Le second circuit de contrôle connecté en amont du filtre actif, reçoit un signal représentatif d'une tension Vr1 à l'entrée du dispositif de filtrage entre les bornes B1 et B3. Un sommateur 12 connectée entre les circuits 10 et 11 de contrôle et le filtre actif permet auxdits circuits de contrôler la tension VFA aux bornes du filtre actif.

Le premier circuit à un premier coefficient Ki, variable en fonction de la fréquence. Le coefficient Ki a une valeur très basse ou nulle pour un courant Is de fréquence sensiblement égale à la fréquence fondamentale de la source et prend une valeur maximale Kimax pour des fréquences plus élevées. Le second circuit a un coefficient Kv, variable en fonction de la fréquence. Sa valeur est faible ou nulle pour des fréquences proches du fondamental Fo et égale à une valeur maximale Kvmax pour des fréquences différentes. La loi de commande du filtre actif de la figure 2 est

$$VFA = Ki \cdot Is + Kv \cdot Vr1$$

Le coefficient Ki est une grandeur semblable à une impédance et peut s'exprimer en ohms. Le coefficient Kv est sans dimension.

Si la charge 2 provoque, par exemple, des courants de cinquième harmonique H5, de septième harmonique H7 et de onzième harmonique H11, et le filtre passif 7 comporte des circuits résonants qui absorbent les harmoniques H5 et H11, alors l'harmonique H7 n'étant pas absorbée par le filtre passif, peut provoquer des surtensions harmoniques. Pour éviter les surtensions dues aux courants de septième harmonique le coefficient Ki a une valeur minimale à une fréquence sensiblement égale audit harmonique H7.

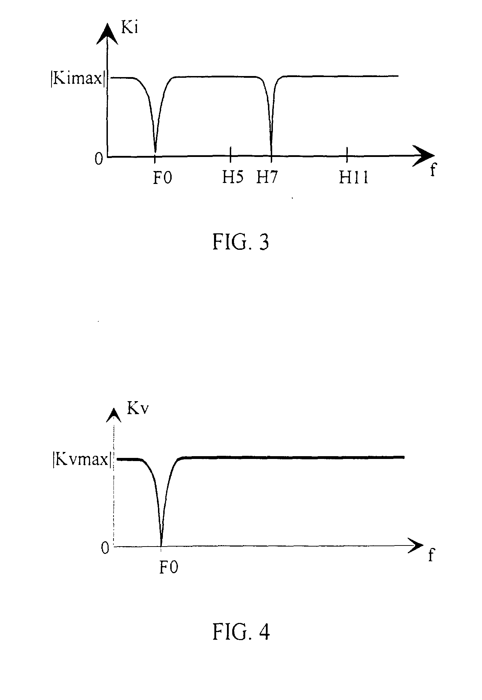

La figure 3 montre la variation du coefficient Ki en fonction de la fréquence. Le coefficient Ki a une valeur faible pour la composante fondamentale Fo et pour l'harmonique H7. La valeur de Ki augmente et atteint une valeur maximale Kimax pour des fréquences éloignées de Fo et H7, notamment pour les harmoniques H5 et H11.

La partie de la tension VFA aux bornes du filtre actif générée par le courant Is et le coefficient Ki est faible pour la fréquence fondamentale Fo et l'harmonique H7 Les composantes Fo et H7 du courant Is peuvent circuler facilement de la source vers la charge et de la charge vers la source.

La figure 4 illustre la variation du coefficient Kv en fonction de la fréquence. Le coefficient Kv a une valeur faible pour la fréquence fondamentale Fo et une valeur maximale Kvmax pour des fréquences de Vr1 éloignées de Fo. La mesure de la tension Vrl en amont du filtre actif permet particulièrement de limiter le transfert de tensions harmoniques de la source vers la charge.

La valeur maximale Kimax du coefficient Ki est déterminée, par exemple, en fonction de l'impédance de condensateurs de compensation connectés à la ligne 8. Ces condensateurs se trouvent notamment dans les circuits résonants. Pour des filtres passifs pouvant absorber 125A sur un réseau alternatif 220V de fréquence Fo=50Hz, la valeur totale Cc de la capacité des condensateurs est de l'ordre de 3500 μF. Les condensateurs ont à la fréquence fondamentale Fo une impédance Zc.
L'expression de la valeur Zc est :

$$Zc = \frac{1}{2 \pi Fo Cc}$$

Dans ce cas, la valeur de Zc est de l'ordre de 1 ohm.

Pour avoir un filtrage efficace Kimax doit avoir de préférence une valeur supérieure à ZC/20. Des valeurs trop élevées de Kimax risquent de déstabiliser le circuit électrique. Il est préférable de choisir une valeur de Kimax inférieure à 5 • Zc.

Le coefficient Kv est un nombre sans dimension. Il permet de reporter sur la tension aux bornes du filtre actif une partie de la tension mesurée en amont du filtre. Pour préserver une bonne stabilité du filtre, la valeur maximale Kvmax de Kv doit être de préférence égale ou inférieure à un.

La tableau 1 illustre un exemple de mesure de taux d'harmonique dans un circuit selon la figure 2. Une première colonne concerne des couples de valeurs du rapport Kimax sur l'impédance Zc, et de Kvmax.

Une seconde colonne indique un taux THD (Is) d'harmonique en courant. Une troisième colonne indique un taux THD (Vch) d'harmonique en tension d'une tension Vch aux bornes de la charge 2. Une quatrième colonne indique la mesure d'un courant Ifp circulant dans les filtres passifs 7.

4

TABLEAU 1

| Kimax / Zc ; Kvmax | THD(Is) | THD(Vch) | Ifp |
|---|---|---|---|
| 0 ; 0 | 33 % | 9.1 % | 125 A |
| | | | |
| 1/10 ; 0.6 | 7.0 % | 3.8 % | 72 A |
| 1/10 ; 0.8 | 5.1 % | 2.3 % | 68 A |
| 1/10 ; 1.0 | 3.7 % | 1.6 % | 65 A |
| | | | |
| 1/2 ; 0.6 | 3.5 % | 4.4 % | 68 A |
| 1/2 ; 0.8 | 3.1 % | 3.8 % | 67 A |
| 1/2 ; 1.0 | 2.8 % | 3.7 % | 67 A |

La première ligne du tableau 1 montre des valeurs sans compensation. Les valeurs maximales des coefficients Kimax et Kvmax sont nulles. Les taux initiaux, THD(Is)=33% et THD(Vch)=9,1%, sont prédéfinis et représentent des harmoniques répartis depuis un second harmonique H2 jusqu'à un vingt-troisième harmonique H23.

Les lignes suivantes du tableau montrent les variations des taux d'harmonique et du courant absorbé par les filtres passifs. Sur la quatrième ligne, le rapport Kimax/Zc est de 1/10, Kvmax est égale à 1, et le taux d'harmonique en tension THD(Vch) est réduit à 1,6%. Sur la septième ligne le rapport Kimax/Zc est égal à 1/2 et le taux d'harmonique en courant THD(Is) est réduit à 2,8%.

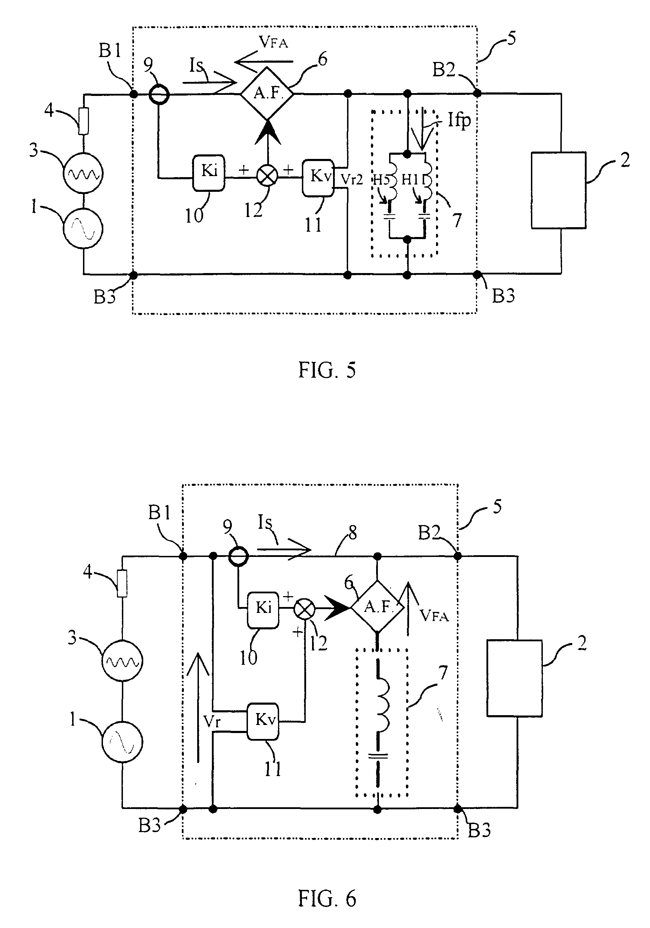

La figure 5 montre un dispositif de filtrage 5 selon un second mode de réalisation de l'invention. Le second circuit de contrôle 11 est connecté en aval du filtre actif aux bornes du filtre passif et mesure la tension Vr2 de sortie du filtre 5. Ce dispositif permet une atténuation plus efficace des surtensions harmoniques sur la charge 2. La loi de commande du filtre actif est :

$$VFA = Ki \bullet Is + Kv \bullet Vr2$$

Elle est analogue à celle du premier mode de réalisation. Les coefficients Ki et Kv ont sensiblement les mêmes caractéristiques que les coefficients respectifs des figures 2, 3 et 4.

La figure 6 représente un schéma d'un circuit comportant un dispositif de filtrage selon un troisième mode de réalisation de l'invention. le filtre actif 6 est disposée en série avec le filtre passif entre les bornes B3 et B2. La borne de sortie B2 est connectée à la borne d'entrée B1. L'ensemble filtre actif et filtre passif se trouve connecté en parallèle sur la charge 2. La tension Vr est alors mesurée entre les bornes B2 et B3 ou B1 et B3 du dispositif de filtrage 5. Elle peut également être mesurée aux bornes du filtre passif 7. Les courants et les tensions harmoniques sont atténuées par dérivation dans l'ensemble des deux filtres. La disposition en série des filtres actifs 6 et des filtres passifs 7 permet, comme dans les premiers et second modes de réalisation, de limiter la puissance à dissiper par les filtres passifs.

Les coefficients de contrôle Ki et Kv illustrés sur les figures 3 et 4 peuvent avoir des variations en fonction de la fréquence de formes très diverses. les formes de ces coefficients vont dépendre de la nature de la charge, des caractéristiques des filtres passifs, et des courants et tensions, harmoniques présents sur le réseau.

Pour des harmoniques particuliers les coefficients Ki ou Kv peuvent prendre des valeurs intermédiaires entre les valeurs minimales ou nulles et les valeurs maximales Kimax ou Kvmax.

Les filtres passifs représentés sur les figures 2 et 5 absorbent les courants harmoniques H5 et H11, mais d'autres types de filtres passifs peuvent être utilisés, notamment des filtres passe-bas, passe-haut, ou rejeteur de bande.

Dans les modes de réalisation décrits ci-dessus les dispositifs de filtrage sont installés dans des circuits alternatifs monophasés. Mais il est possible d'utiliser des dispositifs selon l'invention dans des réseaux triphasés ou dans des réseaux à courant continu. Dans le cas de réseaux continus les termes "harmoniques" et "fondamental" sont remplacés par le terme "bande de fréquence".

**Revendications**

1.  Dispositif de filtrage comportant :

    -   une borne (B1) d'entrée connectée à une source (1) d'énergie électrique, une borne (B2) de sortie connectés à une charge (2) électrique et borne (B3) commune d'entrée-sortie connectée à la source (1) et à la charge (2),

    -   des moyens (7) de filtrage passif et des moyens (6) de filtrage actif connectés en série entre la borne d'entrée et la borne commune du dispositif de filtrage, la borne de sortie étant connectée auxdits moyens de filtrage actif (6), lesdits moyens de filtrage actif (6) comportant deux bornes dont l'une est connectée à la borne d'entrée (B1) et l'autre est connectée aux moyens de filtrage passif et des moyens pour générer une tension (VFA) de filtrage entre lesdites deux bornes,

    -   des premiers moyens (10) de contrôle des moyens de filtrage actif contrôlant la tension (VFA) de filtrage entre les deux bornes desdits moyens de filtrage actif,

    -   des moyens (9) de mesure de courant fournissant aux premiers moyens (10) de contrôle des premiers signaux représentatifs du courant (Is) d'entrée du dispositif de filtrage,

    dispositif **caractérisé en ce qu'**il comporte des seconds moyens (11) de contrôle des moyens de filtrage actif et des moyens de mesure de tension fournissant aux seconds moyens de contrôle des seconds signaux représentatifs de la tension (Vr, Vr1, Vr2) aux bornes des moyens de filtrage passif ou de l'ensemble des moyens de filtrage actif et passif connectés en série, les moyens (6) de filtrage actif comportant des moyens pour générer une tension (VFA) de filtrage entre les deux bornes desdits moyens de filtrage actif, contrôlés par les premiers et seconds moyens de contrôle pour faire circuler facilement de la charge vers la source, en fonction de la fréquence, des courants harmoniques générés par la charge.

2.  Dispositif de filtrage selon la revendication 1 **caractérisé en ce que** la tension (VFA) de filtrage des moyens de filtrage actif est déterminée par la valeur des premiers signaux corrigés par un premier coefficient (Ki) variable en fonction de la fréquence, et par la valeur des seconds signaux corrigés par un second coefficient (Kv) variable en fonction de la fréquence.

3.  Dispositif de filtrage selon la revendication 2 **caractérisé en ce que** le premier coefficient a une valeur basse à une fréquence sensiblement égale à la fréquence fondamentale de la source et une première valeur (Kimax) élevée prédéterminée pour des fréquences couvrant des harmoniques de ladite fréquence fondamentale, et le second coefficient a une valeur basse à une fréquence sensiblement égale à la fréquence fondamentale de la source et une seconde valeur élevée (Kvmax) prédéterminée pour des fréquences couvrant des harmoniques de ladite fréquence fondamentale.

4.  Dispositif de filtrage selon l'une des revendications 2 et 3 **caractérisé en ce que** le premier coefficient (Ki) a une valeur basse à une fréquence sensiblement égale au septième harmonique de la fréquence de la source.

5.  Dispositif de filtrage selon l'une quelconque des revendications 1 à 4 **caractérisé en ce que** les moyens (7) de filtrage passif comportent des filtres accordés sur le cinquième harmonique et sur le onzième harmonique de la fréquence de la source.

6.  Dispositif de filtrage selon l'une quelconque des revendications 2 à 5 **caractérisé en ce que** le premier coefficient (Ki) a une valeur élevée prédéterminée située entre un vingtième et dix fois une valeur représentative de l'impédance de condensateurs de compensation connectés à la charge, l'impédance des condensateurs étant déterminée pour une fréquence sensiblement égale à la fréquence fondamentale de la source.

7.  Dispositif de filtrage selon l'une quelconque des revendications 2 à 6 **caractérisé en ce que** le second coefficient (Kv) a une valeur élevée prédéterminée inférieure ou égale à un.

8.  Dispositif de filtrage selon l'une quelconque des revendications 1 à 7 **caractérisé en ce que** la borne de sortie (B2) du dispositif de filtrage est connectée à un point commun des moyens de filtrage actifs (6) et des moyens de filtrage passifs (7) connectés en série.

9.  Dispositif de filtrage selon l'une quelconque des revendications 1 à 7 **caractérisé en ce que** la borne de sortie (B2) du dispositif de filtrage est connectée à la borne d'entrée (B1) dudit dispositif de filtrage.

**Patentansprüche**

1.  Filtervorrichtung mit

    -   einer an eine elektrische Energiequelle (1) angeschlossenen Eingangsklemme (B1), einer an eine elektrische Last (2) angeschlossenen Ausgangsklemme (B2) sowie einer an die Energiequelle (1) und die Last (2) angeschlossenen gemeinsamen Ein/Ausgangsklemme (B3),

    -   passiven Filtermitteln (7) und aktiven Filtermitteln (6), welche in Reihe zwischen die Eingangsklemme und die gemeinsame Klemme der Filtervorrichtung geschaltet sind, wobei die Ausgangsklemme an die genannten aktiven Filtermittel (6) angeschlossen ist und die genannten aktiven Filtermittel (6) zwei Klemmen, von denen eine mit der Eingangsklemme (B1) und die andere mit den passiven Filtermitteln verbunden ist, sowie Mittel zur Erzeugung einer Filterspannung (VFA) zwischen den beiden genannten Klemmen umfassen,

    -   die Filterspannung (VFA) zwischen den beiden Klemmen der genannten aktiven Filtermittel steuernden, ersten Mitteln zur Steuerung (10) der aktiven Filtermittel,

    -   die ersten Steuermittel (10) mit ersten, den Eingangsstrom (Is) der Filtervorrichtung abbildenden Signalen beaufschlagenden Strommeßmitteln (9),

    **dadurch gekennzeichnet, daß** sie zweite Steuermittel (11) zur Steuerung der aktiven Filtermittel sowie Spannungsmeßmittel umfaßt, die die zweiten Steuermittel mit zweiten Signalen beaufschlagen, welche die Spannung (Vr, Vr1, Vr2) an den Klemmen der passiven Filtermittel oder der Reihenschaltung aus aktiven und passiven Filtermitteln abbilden, wobei die aktiven Filtermittel (6) von den ersten und zweiten Steuermitteln gesteuerte Mittel zur Erzeugung einer Filterspannung (VFA) zwischen den beiden Klemmen der genannten aktiven Filtermittel umfassen, die dazu dienen, eine frequenzabhängige leichte Übertragung von durch die Last erzeugten Oberschwingungsströmen von der Last zur Spannungsquelle zu ermöglichen.

2.  Filtervorrichtung nach Anspruch 1, **dadurch gekennzeichnet, daß** die Filterspannung (VFA) der aktiven Filtermittel durch den Wert der ersten, mit Hilfe eines frequenzabhängigen ersten Korrekturfaktors (Ki) angepaßten Signale sowie durch den Wert der zweiten, mit Hilfe eines frequenzabhängigen zweiten Korrekturfaktors (Kv) angepaßten Signale bestimmt wird.

3.  Filtervorrichtung nach Anspruch 2, **dadurch gekennzeichnet, daß** der erste Korrekturfaktor für eine Frequenz, die annähernd der Grundfrequenz der Spannungsquelle entspricht, einen niedrigen Wert und für Frequenzen des Oberschwingungsspektrums der genannten Grundfrequenz einen bestimmten ersten hohen Wert (Kimax) aufweist, während der zweite Korrekturfaktor für eine Frequenz, die annähernd der Grundfrequenz der Spannungsquelle entspricht, einen niedrigen Wert und für Frequenzen des Oberschwingungsspektrums der genannten Grundfrequenz einen bestimmten zweiten hohen Wert (Kvmax) aufweist.

4.  Filtervorrichtung nach einem der Ansprüche 2 und 3, **dadurch gekennzeichnet, daß** der erste Korrekturfaktor (Ki) bei einer Frequenz, die annähernd der siebten Oberschwingung der Frequenz der Spannungsquelle entspricht, einen niedrigen Wert aufweist.

5.  Filtervorrichtung nach irgendeinem der Ansprüche 1 bis 4, **dadurch gekennzeichnet, daß** die passiven Filtermittel (7) Filter umfassen, die auf die fünfte und die elfte Oberschwingung der Frequenz der Spannungsquelle abgestimmt sind.

6.  Filtervorrichtung nach irgendeinem der Ansprüche 2 bis 5, **dadurch gekennzeichnet, daß** der erste Korrekturfaktor (Ki) einen bestimmten hohen Wert aufweist, der zwischen einem Zwanzigstel und dem Zehnfachen eines Wertes beträgt, welcher die Impedanz von an die Last angeschlossenen Trimmerkondensatoren abbildet, wobei die Impedanz der Kondensatoren für eine Frequenz bestimmt wird, die der Grundfrequenz der Spannungsquelle annähernd entspricht.

**7.** Filtervorrichtung nach irgendeinem der Ansprüche 2 bis 6, **dadurch gekennzeichnet, daß** der zweite Korrekturfaktor (Kv) einen bestimmten hohen Wert aufweist, der kleiner oder gleich 1 ist.

**8.** Filtervorrichtung nach irgendeinem der Ansprüche 1 bis 7, **dadurch gekennzeichnet, daß** die Ausgangsklemme (B2) der Filtervorrichtung an einen gemeinsamen Anschlußpunkt der in Reihe geschalteten aktiven Filtermittel (6) und passiven Filtermittel (7) angeschlossen ist.

**9.** Filtervorrichtung nach irgendeinem der Ansprüche 1 bis 7, **dadurch gekennzeichnet, daß** die Ausgangsklemme (B2) der Filtervorrichtung an die Eingangsklemme (B1) der genannten Filtervorrichtung angeschlossen ist.

**Claims**

**1.** A filtering device comprising :

- an input terminal (B1) connected to an electrical power source (1), an output terminal (B2) connected to an electrical load (2) and a common input-output terminal (B3) connected to the source (1) and to the load (2),

- passive filtering means (7) and active filtering means (6) connected in series between the input terminal and the common terminal of the filtering device, the output terminal being connected to said active filtering means (6), said active filtering means (6) comprising two terminals one whereof is connected to the input terminal (B1) and the other whereof is connected to the passive filtering means and means for generating a filtering voltage (VFA) between said two terminals,

- first means (10) for monitoring the active filtering means monitoring the filtering voltage (VFA) between the two terminals of said active filtering means,

- current measuring means (9) supplying the first monitoring means (10) with first signals representative of the input current (Is) of the filtering device,

a device **characterized in that** it comprises second means (11) for monitoring the active filtering means and voltage measuring means supplying the second monitoring means with second signals representative of the voltage (Vr, Vr1, Vr2) at the terminals of the passive filtering means or of the whole of the active and passive filtering means connected in series, the active filtering means (6) comprising means for generating a filtering voltage (VFA) between the two terminals of said active filtering means, monitored by the first and second monitoring means to make harmonic currents generated by the load flow easily from the load to the source, depending on the frequency.

**2.** The filtering device according to claim 1, **characterized in that** the filtering voltage (VFA) of the active filtering means is determined by the value of the first signals corrected by a first coefficient (Ki) variable according to the frequency, and by the value of the second signals corrected by a second coefficient (Kv) variable according to the frequency.

**3.** The filtering device according to claim 2, **characterized in that** the first coefficient has a low value at a frequency appreciably equal to the fundamental frequency of the source and a first predetermined high value (Kimax) for frequencies covering harmonics of said fundamental frequency, and that the second coefficient has a low value at a frequency appreciably equal to the fundamental frequency of the source and a second predetermined high value (Kvmax) for frequencies covering harmonics of said fundamental frequency.

**4.** The filtering device according to one of the claims 2 and 3, **characterized in that** the first coefficient (Ki) has a low value at a frequency appreciably equal to the seventh harmonic of the source frequency

**5.** The filtering device according to any one of the claims 1 to 4, **characterized in that** the passive filtering means (7) comprise filters tuned to the fifth harmonic and to the eleventh harmonic of the source frequency.

**6.** The filtering device according to any one of the claims 2 to 5, **characterized in that** the first coefficient (Ki) has a predetermined high value situated between one twentieth and ten times a value representative of the impedance of compensating capacitors connected to the load, the impedance of the capacitors being determined for a frequency appreciably equal to the fundamental frequency of the source.

7. The filtering device according to any one of the claims 2 to 6, **characterized in that** the second coefficient (Kv) has a predetermined high value lower than or equal to one.

8. The filtering device according to any one of the claims 1 to 7, **characterized in that** the output terminal (B2) of the filtering device is connected to a common point of the active filtering means (6) and of the passive filtering means (7) connected in series.

9. The filtering device according to any one of the claims 1 to 7, **characterized in that** the output terminal (B2) of the filtering device is connected to the input terminal (B1) of said filtering device.

FIG. 1 (art antérieur)

FIG. 2

FIG. 3

FIG. 4

FIG. 5

FIG. 6